(19) Europäisches Patentamt
European Patent Office
Office européen des brevets

(11) **EP 0 848 231 B1**

(12) **EUROPÄISCHE PATENTSCHRIFT**

(45) Veröffentlichungstag und Bekanntmachung des Hinweises auf die Patenterteilung:
**10.04.2002 Patentblatt 2002/15**

(51) Int Cl.$^{7}$: **G01C 21/16**, G01C 19/56

(21) Anmeldenummer: **98101587.8**

(22) Anmeldetag: **23.05.1995**

(54) **Inertialsensor-Einheit**

Inertial sensor unit

Unité de capteurs inertes

(84) Benannte Vertragsstaaten:
**DE FR GB SE**

(30) Priorität: **08.06.1994 DE 4419925**

(43) Veröffentlichungstag der Anmeldung:
**17.06.1998 Patentblatt 1998/25**

(62) Dokumentnummer(n) der früheren Anmeldung(en) nach Art. 76 EPÜ:
**95710013.4 / 0 686 830**

(73) Patentinhaber: **Bodenseewerk Gerätetechnik GmbH**
**88662 Überlingen (DE)**

(72) Erfinder: **Krogmann, Uwe**
**88662 Überlingen (DE)**

(74) Vertreter: **Weisse, Jürgen, Dipl.-Phys. et al Patentanwälte**
**Dipl.-Phys. Jürgen Weisse**
**Dipl.-Chem. Dr. Rudolf Wolgast**
**Postfach 11 03 86**
**42531 Velbert (DE)**

(56) Entgegenhaltungen:
**EP-A- 0 567 938        DE-U- 9 113 744**
**US-A- 5 001 933**

- **GUSTAFSON S C ET AL: "Locally linear neural networks for aerospace navigation systems" MACHINE INTELLIGENCE FOR AEROSPACE ELECTRONICS SYSTEMS. PAPERS PRESENTED AT THE AVIONICS PANEL SYMPOSIUM (AGARD-CP-499), LISBON, PORTUGAL, 13-16 MAY 1991, 1991, NEUILLY SUR SEINE, FRANCE, AGARD, FRANCE, Seiten 15/1-8, XP002058923**

**Beschreibung**

**Technisches Gebiet**

Die Erfindung betrifft eine Inertialsensor-Einheit zur Messung einer inertialen Meßgröße mit einer Mehrzahl von miniaturisierten, inertialen Sensoren, die so angeordnet sind, daß sie von der gleichen inertialen Meßgröße beaufschlagt sind und Signale in Abhängigkeit von dieser Meßgröße liefern, mit gemeinsamen Signalverarbeitungsmitteln, die mit den Sensoren zur Erzeugung eines die Meßgröße wiedergebenden Ausgangs-Meßsignals verbunden sind.

Unter inertialer Messgrösse ist dabei eine Beschleunigung oder eine Drehgeschwindigkeit gegenüber dem inertialen Raum zu verstehen.

**Stand der Technik**

Inertialsensoren messen die Beschleunigung oder die Drehrate gegenüber dem inertialen Raum. Solche Inertialsensoren können dazu dienen, eine Plattform im Raum zu stabilisieren oder die Position oder Lage eines Trägers zu messen. Zur Messung der Beschleunigung dienen Beschleunigungsmesser. Die Drehgeschwindigkeit wird durch Kreisel gemessen oder durch "Laserkreisel", die auf dem Sagnac-Effekt beruhen. Ein grosses Problem bei solchen Inertialsensoren besteht darin, dass sie über einen sehr grossen Messbereich von mehreren Grössenordnungen hinweg arbeiten müssen. Es wird ausserdem hohe Genauigkeit und Driftfreiheit gefordert. Bekannte Inertialsensoren dieser Art sind daher höchst aufwendige und entsprechend teure Bauteile.

Es sind inertiale Sensoren bekannt, die miniaturisierte Resonatoren enthalten, wobei das Resonanzverhalten des Resonators durch die inertiale Messgrösse beeinflusst ist. Solche inertialen Sensoren sind z.B. Silizium- oder Quarz- Inertialsensoren. Diese Inertialsensoren enthalten eine mikromechanisch hergestellte Stimmgabel aus Silizium oder einen Schwingquarz. Bei einem als Drehgeschwindigkeits-Sensor ausgebildeten Inertialsensor dieser Art (QRS) wird die Frequenz des Schwingquarzes durch die Coriolis-Kraft beeinflusst. Bei einem als Beschleunigungsmesser ausgebildeten Inertialsensor (QAS) ist ein Schwingquarz mit einer Masse verbunden, so dass bei einer inertialen Beschleunigung durch die Trägheitskraft ein Druck auf den Schwingquarz ausgeübt wird. Dieser Druck verändert ebenfalls die Frequenz des Schwingquarzes. Die Frequenzänderungen können als Maß für die jeweilige inertiale Messgrösse benutzt werden.

Solche Inertialsensoren sind klein, einfach und preisgünstig. Sie erfüllen aber nicht die an Inertialsensoren für Stabilisierungs- oder Navigationszwecke gestellten Anforderungen hinsichtlich Dynamikbereich und Genauigkeit. Die Inertialsensoren arbeiten jeweils nur in einem begrenzten Messbereich. Die Genauigkeit der Inertialsensoren ist begrenzt. Die Messcharakteristik der Inertialsensoren ist gekennzeichnet durch komplexe, nichtlineare, funktionale Zusammenhänge zwischen der zu messenden, inertialen Messgrösse und den Ausgangs-Meßsignalen. Dabei sind zusätzliche Abhängigkeiten von anderen Einflussgrössen, beispielsweise der Temperatur, zu berücksichtigen.

Ein Aufsatz von Bernstein u.a. "A Micromachined Comb-Drive Tuning Fork Rate Gyroscope" in IEEE 1993, S. 143-147, beschreibt einen Wendekreisel in Form einer mikromechanischen Stimmgabel aus Silizium, Polysilizium oder Nickel. Hier ergeben sich ähnliche Probleme wie bei Inertialsensoren.

Die EP-A-0 567 938 beschreibt einen digitalen Beschleunigungsmesser mit einer Mehrzahl von miniaturisierten, inertialen Sensoren, wobei die Signale der Sensoren auf gemeinsame Signalverarbeitungsmittel zur Erzeugung eines die Meßgröße wiedergebenden Ausgangs-Meßsignals aufgeschaltet ist. Die mikromechanischen Sensoren sind dabei mikromechanisch hergestellte federnde Arme mit Massen, wobei diese Arme bei auftreten einer Beschleunigung ausgelenkt werden. Wenn die Beschleunigung hinreichend groß ist, wird durch die Auslenkung der Arme ein Kontakt geschlossen. Diese Kontaktgabe wird gespeichert. Bevorzugt ist eine zweidimensionale Anordnung solcher mikromechanischer Sensoren vorgesehen, wobei die Sensoren in einer Richtung der zweidimensionalen Anordnung unterschiedliche Resonanzfrequenzen besitzen und in der anderen Richtung unterschiedliche Empfindlichkeiten, d.h. bei unterschiedlichen Werten der Beschleunigung Kontakt geben. Auf diese Weise kann ein digitaler Wert der Beschleunigung erhalten werden.

Die US-A-5 001 933 beschreibt einen mikromechanischen Vibrationssensor zur Erkennung von Schwingungsfrequenzen, welche zu Lagerproblemen führen können. Ein mikromechanischer Resonator enthält einen Arm mit einem freien Ende. Der Arm erstreckt sich in die Öffnung eines U-förmigen Kontakts hinein. Wenn Vibrationen mit einer bestimmten Frequenz und Amplitude auftreten, schwingt das freie Ende des Arms, so daß die Öffnung des Kontakts geschlossen und dadurch einen Stromkreis geschlossen wird. Es können mehrere solche Vibrationssensoren mit unterschiedlichen Resonanzfrequenzen an einem Träger vorgesehen werden, um eine Vielzahl von Schwingungen mit unterschiedlichen Frequenzen zu überwachen.

Die DE-U-91 13 744 offenbart einen dreidimensionalen mikromechanischen Beschleunigungssensor mit integrierter Elektronik. Drei eindimensionale mikromechanische Beschleunigungssensoren sind auf drei orthogonal zueinander ausgerichteten Seiten eines prismatischen Grundkörpers angeordnet. Elektronische Bauelemente zur Auswertung der Sensorsignale befinden sich auf weiteren Seiten des Grundkörpers. Die Grundfläche des Grundkörpers dient der Befestigung der Baugruppe auf einem Träger.

Ein Aufsatz von Steven C. Gustafson u.a. "Locally Linear Neural Networks for Aerospace Navigation Systems" in MACHINE INTELLIGENCE FOR AEROSPACE ELECTRONICS SYSTEMS, AVIONICS PANEL SYMPOSIUM, 13-16 Mai, 1991, Seiten 15/1-8, beschreibt eine Verwendung von Software-Simulationen mit neuronalen Netzen für Navigationssysteme.

**Offenbarung der Erfindung**

Der Erfindung liegt die Aufgabe zugrunde, eine einfach aufgebaute Inertialsensor-Einheit zu schaffen, die den für Stabilisierungs- und Navigationszwecke gestellten Anforderungen genügt

Insbesondere liegt der Erfindung die Aufgabe zugrunde, eine einfach aufgebaute Inertialsensor-Einheit mit hohem Dynamikbereich zu schaffen.

Erfindungsgemäss werden diese Aufgaben dadurch gelöst, dass

(a) jeder der inertialen Sensoren (12;36;40;48) einen miniaturisierten Resonator enthält, wobei der miniaturisierte Resonator so angeordnet ist, daß dessen Frequenz durch die inertiale Meßgröße beeinflußt ist, wobei diese Resonatorfrequenz als Maß für die jeweilige inertiale Meßgröße dient, und

(b) zur Messung der inertialen Meßgröße über einen ausgedehnten Meßbereich hinweg eine Mehrzahl von solchen als miniaturisierte Resonatoren ausgebildeten Sensoren (12.11....12.N1) mit unterschiedlichen Meßbereichen so angeordnet ist, daß jeder dieser Sensoren (12.11 ... 12.N1) in einem Teilbereich des besagten ausgedehnten Meßbereiches arbeitet.

Die Erfindung gestattet die Verwendung von preisgünstig herstellbaren, kleinen und leichten miniaturisierten Inertialsensoren, z.B. Silizium- oder Quarz-Inertialsensoren. Durch eine Vermehrfachung solcher Sensoren und Aufschaltung der Sensorsignale auf eine gemeinsame Signalverarbeitung kann der Messbereich der gesamten Inertialsensor-Einheit auf die Anforderungen angehoben werden, die an Inertialsensoren für Stabilisierungs- und Navigationszwecke gestellt werden. Die Vervielfachung der miniaturisierten Inertialsensoren wird möglich, weil jeder einzelne dieser miniaturisierten Intertialsensoren nur einen relativ geringen Aufwand erfordert. Statt eines aufwendigen Inertialsensors in Form eines konventionellen Kreisels, Laserkreisels oder Beschleunigungsmessers werden viele miniaturisierte Inertialsensoren mit geringerer Güte aber auch geringerem Preis, geringem Raumbedarf und geringem Gewicht verwendet.

Konstruktiv kann eine Inertialsensor-Einheit so aufgebaut sein, dass

- auf einem ebenen Waferträger von rechteckiger Grundform in Längsrichtung nebeneinander drei Wafer mit Gruppen von Sensoren ausgebildet sind,

- die Eingangsachsen einer ersten und einer dazu benachbarten zweiten Gruppe bei ebenem Waferträger zueinander parallel verlaufen,

- die Eingangsachsen der dritten Gruppe bei ebenem Waferträger senkrecht zu den Eingangsachsen der ersten und der zweiten Gruppe verlaufen und

- der Waferträger zwischen den Gruppen entlang in Querrichtung verlaufender Faltkanten um jeweils 90° abgewinkelt sind.

Dann entsteht eine Struktur mit drei zueinander senkrechten, u-förmig angeordneten Steitenflächen, wobei die Eingangsachsen der drei Gruppen von Inertialsensoren ein orthogonales Achsensystem bilden.

Dabei ist vorteilhafterweise ein die Signal-Verarbeitungsmittel enthaltendes Mikroelektronik-Modul in dem von dem gefalteten Waferträger umschlossenen Hohlraum angeordnet.

Die nichtlinearen Charakteristiken der ggf. noch unterschiedlichen Inertialsensoren können dadurch berücksichtigt werden, dass die Signalverarbeitungsmittel ein erstes neuronales Netz aufweisen, das anhand von wirksamen inertialen Messgrössen und zugeordneten Ausgangs-Meßsignalen trainiert ist.

Weiterhin können die Signalverarbeitungsmittel ein zweites neuronales Netz aufweisen, das auf die Erkennung von Ausfällen von Sensoren trainiert ist und das erste neuronale Netz von dem zweiten neuronalen Netz im Sinne einer Rekonfiguration der Sensoren beeinflussbar ist.

Es ergibt sich dann eine kompakt Inertialsensor-Einheit mit hoher Genauigkeit, grossem dynamischen Bereich und hoher Redundanz, also Unempfindlichkeit gegen den Ausfall einzelner Sensoren.

Ausgestaltungen der Erfindung sind Gegenstand abhängiger Patentansprüche.

Ausführungsbeispiele der Erfindung sind nachstehend unter Bezugnahme auf die zugehörigen Zeichnungen näher erläutert.

**Kurze Beschreibung der Zeichnungen**

Figur 1     ist eine schematisch-perspektivische Darstellung einer Inertialsensor-Einheit, die aus einer Mehrzahl von Silizium- oder Quarz Inertialsensoren aufgebaut ist.

Figur 2     zeigt perspektivisch ein Flugzeug und die Achsen in denen die Komponenten der inertialen Messgrössen bestimmt werden sollen.

Figur 3    zeigt einen planen Waferträger mit drei Wafern, die jeder eine Gruppe von miniaturisierten Inertialsensoren tragen.

Figur 4    ist eine perspektivische Darstellung und zeigt den ersten Schritt einer Faltung des Waferträgers.

Figur 5    ist eine perspektivische Darstellung und zeigt den zweiten Schritt der Faltung des Waferträgers.

Figur 6    ist eine auseinandergezogene, perspektivische Darstellung einer Inertialsensor-Einheit mit dem gefalteten, die miniaturisierten Inertialsensoren tragenden Waferträger und der zugehörigen Elektronik, die in den von dem gefalteten Waferträger umschlossenen Hohlraum eingeschoben ist.

Figur 7    ist ein Blockdiagramm der Signalverarbeitung.

Figur 8    ist ein etwas detaillierter dargestelltes Blockdiagramm der Signalverarbeitung.

**Bevorzugte Ausführungen der Erfindung**

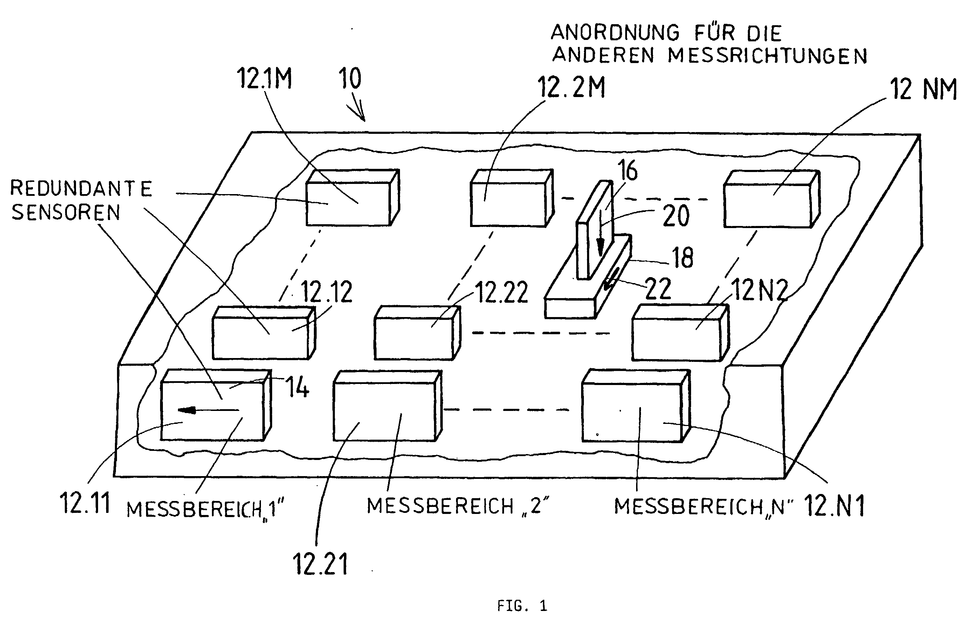

Bei der Ausführung nach Fig. 1 enthält die Inertialsensor-Einheit 10 längs einer Vorderkante N miniaturisierte Inertialsensoren 12.11, 12.21 ... 12.N1 in Form von Silizium- oder Quarz-Inertialsensoren. Der Inertialsensor 12.11 hat einen Messbereich "1", der Inertialsensor 12.21 hat einen Messbereich "2", der sich an den Messbereich "1" anschliesst. Die weiteren, durch Strichelung angedeuteten Inertialsensoren haben weiter sich daran anschliessende Messbereiche bis zu dem Inertialsensor 12.N1 mit dem Messbereich "N". Die Messbereiche "1" bis N bilden sich aneinander anschliessende Teilbereiche eines ausgedehnten Messbereichs. Die Inertialsensoren 12.11 bis 12.N1 sprechen auf Beschleunigungen in Richtung des Pfeiles 14 an. Sie können auch Inertialsensoren sein, die auf Drehraten um die durch den Pfeil bestimmten Eingangsachsen ansprechen. Die miniaturisierten Inertialsensoren 12.11 bis 12.N1 überdecken zusammen einen ausgedehnten Messbereich.

Jeder der miniaturisierten Inertialsensoren 12.11 bis 12.N1 ist vermehrfacht vorgesehen. Ausser dem Inertialsensor 12.11 sind weitere, im wesentlichen damit übereinstimmende und ebenfalls in dem Messbereich "1" messende Inertialsensoren 12.12 bis 12.1M vorgesehen. Ausser dem Inertialsensor 12.21 existieren die Inertialsensoren 12.22 bis 12.2M usw. Ausser dem Inertialsensor 12.N1 existieren im wesentlichen damit übereinstimmende Inertialsensoren 12.N2 bis 12.NM. Zur Erhöhung der Genauigkeit wird der Mittelwert der Ausgangssignale der Inertialsensoren 12.11 bis 12.1 M gebildet. In entsprechender Weise werden die Mittelwerte der übrigen "Spalten" der "Matrix" von Inertialsensoren bis zu den Inertialsensoren 12.N1 bis 12.NM gebildet.

In Fig. 1 ist weiter ein Paar von Inertialsensoren 16 und 18 dargestellt. Die Inertialsensoren 16 und 18 messen die Komponenten der Messgrösse, z.B. Beschleunigung, senkrecht zueinander und zu der Richtung der durch Pfeil 14 repräsentierten Eingangsachse. Die Eingangsachse des Inertialsensors 16 ist durch einen Pfeil 20 und die Eingangsachse des Inertialsensors 18 ist durch einen Pfeil 22 dargestellt. Die Inertialsensor-Einheit 10 enthält ebenfalls jeweils eine "Matrix" von Inertialsensoren der Art von Inertialsensor 18. Auch hier haben die Inertialsensoren der "Spalten" unterschiedliche Messbereiche, die Teilbereiche eines ausgedehnten Messbereiches bilden. Auch hier werden zur Erhöhung der Genauigkeit die Mittelwerte der Signale der Inertialsensoren jeder Spalte gebildet.

Die "Matrizen" der Inertialsensoren 16 und 18 sind in Fig. 1 nicht dargestellt. Es versteht sich, dass die Inertialsensoren nicht notwendig, wie dargestellt, in einer rechteckigen "Matrix" angeordnet sein müssen.

Die Inertialsensoren sind zusammen mit der zugehörigen Schaltung in einem Baustein integriert.

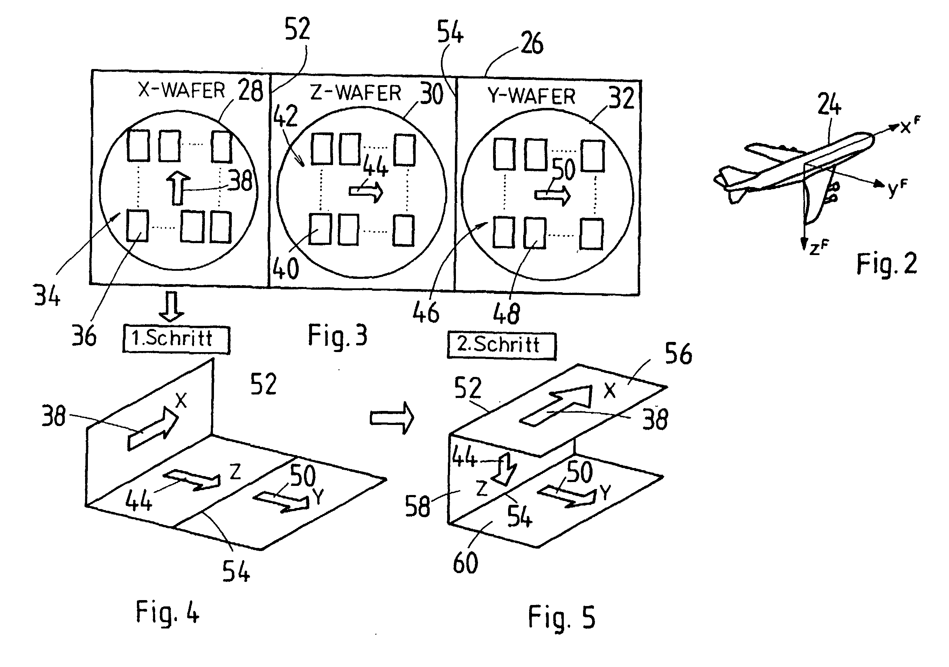

Für Stabilisierungs- oder Navigationszwecke ist es erforderlich, inertiale Messgrössen (Beschleunigungen, Drehgeschwindigkeiten) in drei zueinander senkrechte Achsen zu messen. Bei einem Flugzeug 24, wie es in Fig. 2 dargestellt ist, sind diese Achsen die Flugzeug-Längsachse $x^F$, die Querachse $y^F$ und die Hochachse $z^F$. Fig. 3 bis 6 zeigen den Aufbau einer Inertialsensor-Einheit, welche inertiale, vektorielle Messgrössen in drei Achsen zu messen gestattet.

In Fig. 3 ist ein langgestreckt-rechteckiger Waferträger 26 dargestellt. Auf dem Waferträger 26 sitzen in Längsrichtung des Waferträgers 26 nebeneinander ein "X-Wafer" 28, ein "Z-Wafer" 30 und ein "Y-Wafer" 32. Auf dem X-Wafer 28 ist eine erste Gruppe 34 von miniaturisierten Inertialsensoren ausgebildet. Die Gruppe 34 von Inertialsensoren besteht beispielsweise aus Silizium- oder Quarz-Drehgeschwindigkeitssensoren (QRSs) 36. Die Drehgeschwindigkeitssensoren 36 sind in einer Matrix aus Zeilen und Spalten auf dem X-Wafer ausgebildet. Die Eingangsachsen der Drehgeschwindigkeitssensoren 36 liegen sämtlich in Richtung des Pfeiles 38.

Die Drehgeschwindigkeitssensoren 36 auf dem Wafer 28 können sämtlich im wesentlichen übereinstimmend ausgebildet sein. Vorteilhafterweise sind jedoch die jeweils in einer Zeile der Matrix angeordneten Drehgeschwindigkeitssensoren 36 wie bei der Ausführung nach Fig. 1 für unterschiedliche Messbereiche ausgelegt, die Teilbereiche eines ausgedehnten Messbereiches bilden.

Die in einer Spalte der Matrix angeordneten Drehgeschwindigkeitssensoren 36 sind jeweils untereinander im wesentlichen übereinstimmend. Es können auch auf dem X-Wafer 28 zusätzlich Beschleunigungsmesser ausgebildet sein. Auch deren Eingangsoder Empfindlichkeitsachsen liegen in der Richtung des Pfeiles 38.

In entsprechender Weise ist der Z-Wafer 30 mit der zweiten Gruppe 42 von Silizium-oder Quarz Drehgeschwindigkeitssensoren 40 ausgebildet. Die Eingangs- oder Empfindlichkeitsachsen der Drehgeschwindigkeitssensoren 40 liegen sämtlich in Richtung des Pfeiles 44, also in Fig. 3 senkrecht zu den durch den Pfeil 38 repräsentierten Eingangs- oder Empfindlichkeitsachsen der Drehgeschwindigkeitssensoren 36 der ersten Gruppe 34.

Der Y-Wafer 32 weist eine dritte Gruppe 46 von Silizium- oder Quarz-Drehgeschwindigkeitssensoren 48 auf. Die Drehgeschwindigkeitssensoren 48 der dritten Gruppe 46 sind in gleicher Weise in einer Matrix angeordnet wie die Drehgeschwindigkeitssensoren der zweiten Gruppe 42. Die Eingangs- oder Empfindlichkeitsachsen der Drehgeschwindigkeitssensoren 48 liegen in Richtung des Pfeiles 50 parallel in Fig. 3 zu den Eingangs- oder Empfindlichkeitsachsen der Quarz-Geschwindigkeitssensoren 40 der zweiten Gruppe 42.

Der langgestreckt-rechteckige Waferträger 26 ist in der in Fig. 4 und 5 dargestellten Weise längs der Faltkanten 52 und 54 abgewinkelt. Zunächst wird der Waferträger 26 zwischen den Wafern 28 und 30 und Gruppen 34 bzw. 42 längs der Faltkante 52 um 90° abgewinkelt. Das ist in Fig. 4 dargestellt. Dann erfolgt eine Abwinklung um weitere 90° längs der Faltkante 54. Es entsteht ein im Querschnitt u-förmiges Gebilde mit drei Abschnitten 56, 58, 60 des Waffenträgers 26. Aus Fig. 5 ist erkennbar, dass die Richtungen der Eingangs- oder Empfindlichkeitsachsen der Inertialsensoren 36, 40 und 48, wie sie in Fig. 4 und 5 durch die Pfeile 38, 44 bzw. 50 repräsentiert sind, zueinander orthogonal sind. Sie können in einem Flugzeug 24 in Richtung der Achsen $x^F$, $z^F$ bzw. $y^F$ ausgerichtet werden.

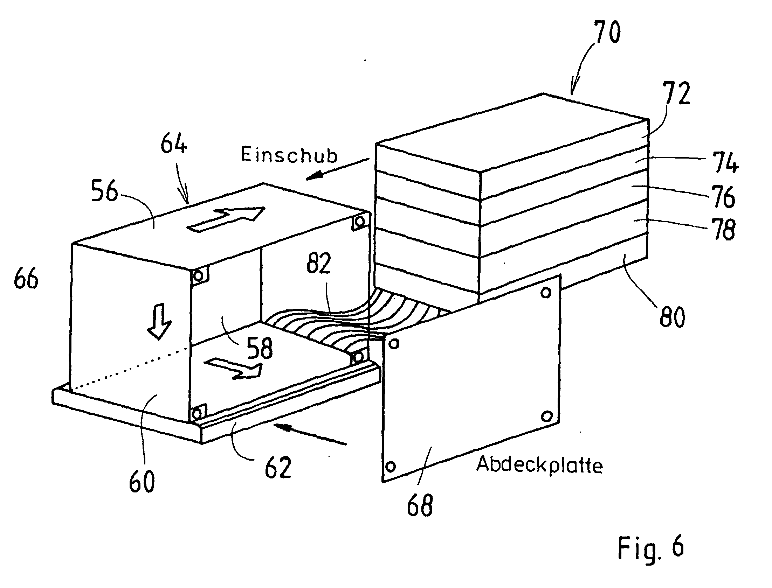

Fig. 6 zeigt die konstruktive Ausbildung der Inertialsensor-Einheit.

Mit 62 ist eine Montageplatte bezeichnet. Auf der Montageplatte 62 sitzen die Abschnitte 56, 58 und 60 des Waferträgers 26. Davon liegt der Abschnitt 60 auf der Montageplatte 62 auf. Die Abschnitte 58 und 56 bilden die Rückwand bzw. Oberseite eines rechteckigen Gehäuses 64. Das Gehäuse 64 ist an einer Stirnseite durch eine Gehäusewand 66 geschlossen. Auf der gegenüberliegenden Stirnseite ist das Gehäuse 64 offen. Auf der Vorderseite, gegenüber dem Abschnitt 58 ist das Gehäuse 64 durch eine lösbare Abdeckplatte 68 verschlossen. Von der offenen Stirnseite her wird in das Gehäuse 64 ein Mikroelektronik-Modul 70 eingeschoben.

Das Mikroelektronik-Modul 70 enthält eine Schnittstelle 72, eine Ausleseelektronik 74, die Signalverarbeitungs-Schaltung 76, die Stromversorgung 78 sowie Verkabelung und Anschlüsse 80. Das Mikroelektronik-Modul 70 ist mit den die Inertialsensoren 36, 40 und 48 bildenden Wafern 28, 30 bzw. 32 über ein Flachbandkabel 82 verbunden. Dadurch ergibt sich eine sehr kompakte Inertialsensor-Einheit mit Silizium-oder Quarz-Drehgeschwindigkeitssensoren (QRS) und Silizium- oder Quarz-Beschleunigungssensoren (QAS), die Drehgeschwindigkeiten und Beschleunigungen in drei zueinander senkrechten Richtungen misst.

Die Signalverarbeitung solcher Inertialsensoren bietet besonsere Probleme.

Miniaturisierte Inertialsensoren der hier vorliegenden Art wie Silizium- oder Quarz-Inertialsensoren liefern sehr stark nichtlineare Ausgangssignale in Form von Frequenzen.

Diese Frequenzen hängen stark nichtlinear z. B. von der Drehgeschwindigkeit ab. Mit einem bestimmten Inertialsensor kann jeweils nur ein begrenzter Bereich der inertialen Messgrösse um einen Arbeitspunkt herum erfasst werden. Dieser Bereich hängt von der Dimensionierung des Inertialsensors ab. Ausserhalb dieses Bereiches ergibt sich praktisch keine Abhängigkeit von der Drehgeschwindigkeit. Auf der einen Seite des Bereiches ist bei der gegebenen Dimensionierung die Empfindlichkeit zu gering. Auf der anderen Seite des Bereiches tritt eine Sättigung ein. Und auch innerhalb des Bereiches ist die Charakteristik des Inertialsensors nichtlinear.

Es gilt nun, aus einer Matrix solcher Inertialsensoren und den von diesen gelieferten Signalen ein Meßsignal zu erzeugen, das

- über einen ausgedehnten Messbereich hinweg eine lineare Charakteristik zeigt, also einen linearen Zusammenhang zwischen der wirksamen inertialen Messgrösse und dem durch Signalverarbeitungsmittel erzeugten Ausgangs-Meßsignal, und

- eine gegenüber der Genauigkeit eines einzelnen miniaturisierten Inertialsensors durch die Verarbeitung der Signale mehrerer im wesentlichen übereinstimmender Inertialsensoren für jeden Teilbereich des ausgedehnten Messbereichs erhöhte Genauigkeit besitzt.

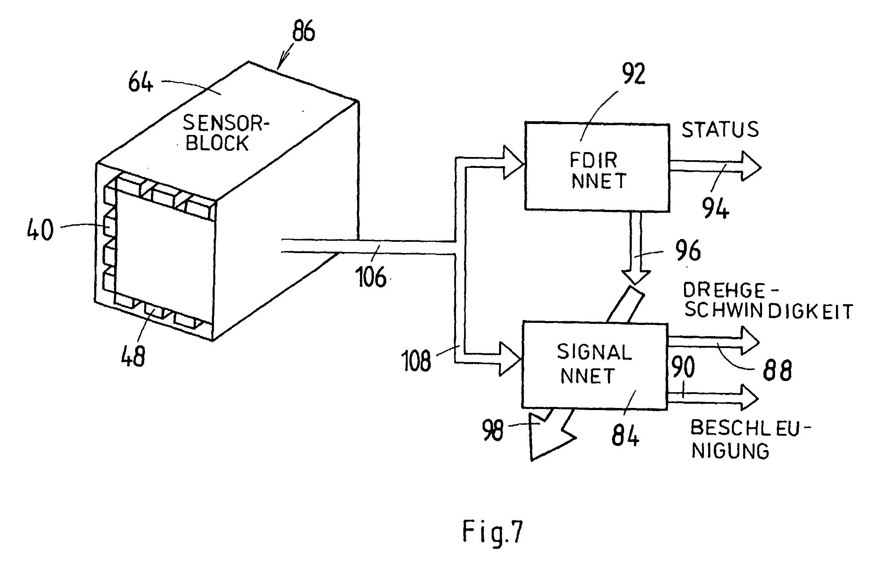

Das wird gemäss Fig. 7 mittels eines neuronalen Netzes 84, des "Signal-NNET", erreicht, welches einen Teil der Signalverarbeitung 76 in Fig. 6 bildet.

Das neuronale Netz 84 erhält die Signale sämtlicher miniaturisierten Inertialsensoren 36, 40, 48. Das neuronale Netz kann weiterhin von Signalen beaufschlagt sein, die weitere Einflussgrössen, z.B. Temperaturen, darstellen. Das neuronale Netz 84 wird trainiert. Hierzu wird die Inertialsensor-Einheit in Form eines Sensorblocks 86 verschiedenen inertialen Messgrössen und z.B. Temperaturen unterworfen. Die dabei erhaltenen Ausgangssignale werden mit "Sollwerten" einer gewünschten Charakteristik verglichen. Die Gewichte des neuronalen Netzes 84 werden nach Massgabe dieses Vergleichs nach einem vorgegebenen Algorithmus verändert.

Ein solches Trainieren eines neuronalen Netzes ist an sich bekannte Technik und daher hier nicht im einzelnen beschrieben.

Nach dem Trainieren des neuronalen Netzes 84 erfolgt durch das neuronale Netz

- die Kompensation der komplexen, nichtlinearen Meßcharakteristik der einzelnen Inertialsensoren,

- die Kompensation der anderen Einflussgrössen, z. B. der Temperatur,

- die Zusammenfassung der Signale von verschiedenen Inertialsensoren, die in je einem Teilbereich des ausgedehnten Messbereiches wirksam sind, zu einem Ausgangssignal, welches in dem gesamten ausgedehnten Messbereich die inertiale Messgrösse wiedergibt,

- die Bildung eines die inertiale Meßgrösse mit höherer Genauigkeit wiedergebenden Ausgangssignals aus redundanten Signalen, die durch eine Mehrzahl von gleichartigen Inertialsensoren erzeugt werden, wobei durch Mittelwertbildung eine Erhöhung der Genauigkeit um einen Faktor $\sqrt{N}$ erzielt wird, wenn N die Anzahl der jeweils gleichartigen Inertialsensoren ist, und

- eine Kompensation von Montagefehlem in der Plazierung der Inertialsensoren 36, 40, 48 auf den Wafern 28, 30,32, in der Orientierung der Wafer 28, 30, 32 auf den Abschnitten 56, 58, 60 des Waferträgers 26 sowie von Orientierungsfehlem, die bei der Faltung des Waferträgers 26 gemäss Fig. 4 und 5 bei der Herstellung des Sensorblocks 86 entstehen.

Die Funktionen dieses neuronalen Netzes 84 brauchen nicht programmiert zu werden. Es ist daher nicht erforderlich, die oben geschilderten Effekte zu modellieren. Vielmehr lernt das neuronale Netz in einer Kalibrierphase die mathematischen Zusammenhänge zwischen den funktional beteiligten Variablen.

Bei der Herstellung des Sensorblocks 86 brauchen deshalb keine besonderen Genauigkeiten eingehalten zu werden. Der Sensorblock 86 enthält Drehgeschwindigkeitssensoren und Beschleunigungssensoren. Die Signale aller Sensoren sind auf das neuronale Netz 84 aufgeschaltet. Das neuronale Netz 84 liefert an einem Ausgang 88 ein die Drehgeschwindigkeiten repräsentierendes Ausgangssignal und an einem Ausgang 90 ein die Beschleunigungen (in drei Achsen) repräsentierendes Ausgangssignal.

Die Inertialsensoren in den "Spalten" jeder Matrix sind im wesentlichen jeweils übereinstimmend. In den "Zeilen" der Matrix sind daher mehrere im wesentlichen übereinstimmende Sätze jeweils unterschiedlichen Inertialsensoren vorgesehen. Die Information wird dadurch redundant geliefert. Ausser zur Erhöhung der Genauigkeit durch Mittelwertbildung kann diese Redundanz auch dazu ausgenutzt werden, Ausfälle solcher Inertialsensoren zu erkennen und durch Rekonfiguration zu kompensieren.

Bei der Ausführung nach Fig. 7 wird dies durch ein weiteres neuronales Netz 92 bewirkt, ein "FDIR-NNET" (Netz für Fehler-Detektion,-Identifikation und Sensor-Rekonfiguration). Das neuronale Netz 92 ist nach Art der oben erwähnten DE-A-42 44 014 aufgebaut. Dem fehlererkennenden neuronalen Netz 92 werden die gleichen Signale von den Inertialsensoren 36, 40, 48 zugeführt wie dem signalverarbeitenden, neuronalen Netz 84. Das fehlererkennende neuronale Netz 92 ist darauf trainiert, bei einem Ausfall eines Inertialsensors oder eines Satzes von Inertialsensoren an einem Ausgang 94 einen "Status" zu liefern, d.h. einen Signalvektor, der angibt, an welchem Inertialsensor der Ausfall eintrat.

Der "Status"-Vektor ist ausserdem, wie durch einen Ausgang 96 angedeutet ist, als weiterer Eingang auf das neuronale Netz 84 aufgeschaltet und beeinflusst dieses neuronale Netz 84. Das ist durch einen Pfeil 98 symbolisiert. Das signalverarbeitende neuronale Netz 84 ist auch mit abgeschalteten Sensorsignalen und entsprechenden Status-Vektoren trainiert, auf Ausfall von Inertialsensoren zu reagieren und solche Ausfälle bei der Bildung der Drehgeschwindigkeits- und Beschleunigungs-Signale an den Ausgängen 88 bzw. 90 zu berücksichtigen.

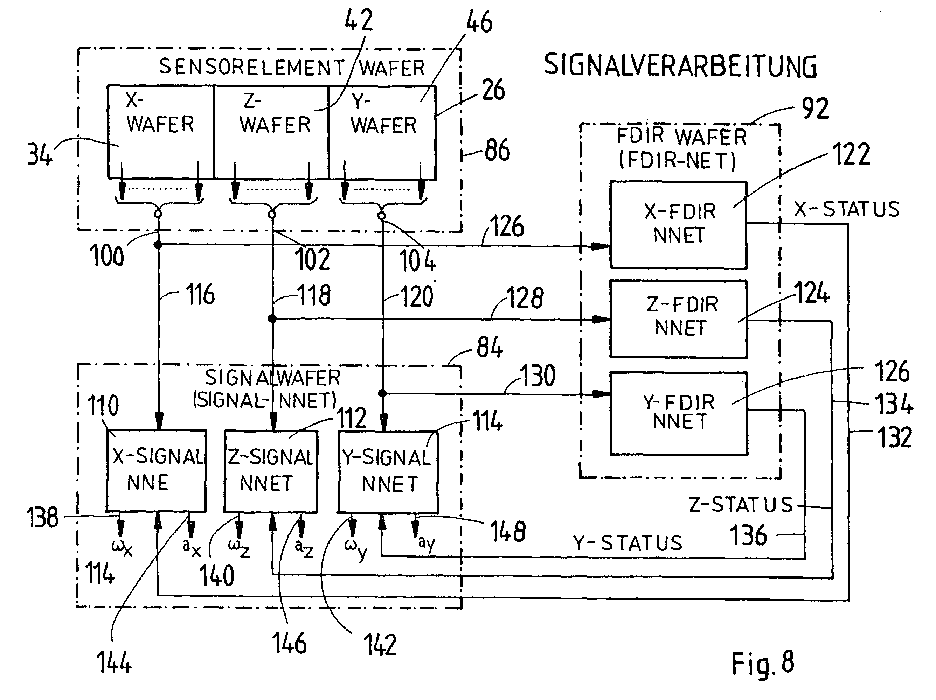

Fig. 8 zeigt den Aufbau der neuronalen Netze 84 und 92.

Die auf dem Wafer 26 angeordneten Gruppen 34, 42 und 46 von Inertialsensoren 36, 40 bzw. 48 liefern Meßsignale an Ausgängen 100, 102 bzw. 104 getrennt für die Komponenten in Richtung der X-Achse, der Z-Achse bzw. der Y-Achse. Die Ausgänge 100, 102 und 104 sind in Fig. 7 durch einen Bus 106 dargestellt. Die Ausgänge sind mit dem Flachkabel 82 von Fig. 6 verbunden.

Die Ausgänge 100, 102, 104 sind einmal mit dem signalverarbeitenden neuronalen Netz 84 verbunden, wie in Fig. 7 durch einen Bus 108 dargestellt ist. Wie aus Fig. 8 ersichtlich ist, enthält das neuronale Netz 84 seinerseits drei getrennte neuronale Netze 110, 112 und 114 für die x-Komponenten, die y-Komponenten bzw. die z-Komponenten der vektoriellen Messgrössen. Der tatsächlich von einer Mehrzahl von Signalausgängen gebildete Ausgang 100 ist über eine Verbindung 116 mit dem neuronalen Netz 110 verbunden. Der Ausgang 102 ist über eine Verbindung 118 mit dem neuronalen Netz 112 verbunden. Der Ausgang 104 ist über eine Verbindung 120 mit dem neuronalen Netz 114 verbunden.

Das fehlererkennende neuronale Netz 92 ist ebenfalls aus drei getrennten neuronalen Netzen 122, 124 und 126 für die Inertialsensoren 36, 40 bzw. 48 aufgebaut. Der Ausgang 100 ist über eine Verbindung 126 mit dem neuronalen Netz 122 verbunden. Der Ausgang 102 ist über eine Verbindung 128 mit dem neuronalen Netz 124 verbunden. Der Ausgang 104 ist über eine Verbindung 130 mit dem neuronalen Netz 126 verbunden. Durch die neuronalen Netze 122, 124 und 126 werden Status-Vektoren für die Inertialsensoren 36, 40 bzw. 48 erzeugt. Diese Status-Vektoren sind über Verbindungen 132, 134 bzw. 136 als weitere Eingangsgrössen auf die jeweils zugehörigen, signalverarbeitenden neuronalen Netze 110, 112 bzw. 114 aufgeschaltet. Die Verbindungen 132, 134 und 136 entsprechen dem Ausgang 96 von Fig. 7.

Jedes der neuronalen Netze 110, 112 und 114 liefert einmal an einen ersten Ausgang 138, 140 bzw. 142 die betreffende Komponente $\omega_x$, $\omega_z$, $\omega_y$ der Drehgeschwindigkeit und an einem zweiten Ausgang 144, 146 bzw. 148 die betreffende Komponente $a_x$, $a_z$ bzw. $y_y$ der Beschleunigung. Die Ausgänge 138, 140 und 142 von Fig. 8 sind in dem Ausgang 88 von Fig.7 zusammengefasst.

Bei der beschriebenen Inertialsensor-Einheit werden die einzelnen Komponenten der Messgrössen unabhängig voneinander verarbeitet.

Statt der beschriebenen miniaturisierten Inertialsensoren können in ähnlicher Weise auch andere mikromechanische Inertialsensoren benutzt werden. Solche mikromechanischen Inertialsensoren können Stimmgabel-Kreisel aus Silizium oder Polysilizium sein. Beschleunigungsmesser können mikromechanisch nach Art eines Pendel-Beschleunigungsmessers aufgebaut sein. Auch andere miniaturierte Resonatoren wie Mikrooptik-Kreisel (MOGs) können für diese Anwendung in Frage kommen.

**Patentansprüche**

1.  Inertialsensor-Einheit zur Messung einer inertialen Meßgröße mit einer Mehrzahl von miniaturisierten, inertialen Sensoren (12;36;40;48), die so angeordnet sind, daß sie von der gleichen inertialen Meßgröße beaufschlagt sind und Signale in Abhängigkeit von dieser Meßgröße liefern, mit gemeisamen Signalverarbeitungsmitteln (70), die mit den inertialen Sensoren (12; 36; 40; 48) zur Erzeugung eines die Meßgröße wiedergebenden Ausgangs-Meßsignals verbunden sind, **dadurch gekennzeichnet, daß**

    (a) jeder der inertialen Sensoren (12;36;40;48) einen miniaturisierten Resonator enthält, wobei der miniaturisierte Resonator so angeordnet ist, daß dessen Frequenz durch die inertiale Meßgröße beeinflußt ist, wobei diese Resonatorfrequenz als Maß für die jeweilige inertiale Meßgröße dient, und

    (b) zur Messung der inertialen Meßgröße über einen ausgedehnten Meßbereich hinweg eine Mehrzahl von solchen als miniaturisierte Resonatoren ausgebildeten Sensoren (12.11.... 12.N1) mit unterschiedlichen Meßbereichen so angeordnet ist, daß jeder dieser Sensoren (12.11 ... 12.N1) in einem Teilbereich des besagten ausgedehnten Meßbereiches arbeitet.

2.  Inertialsensor-Einheit nach Anspruch 1, **dadurch gekennzeichnet, dass** die Sensoren (12;36;40; 48) von Silizium- oder Quarz-Inertialsensoren gebildet sind.

3.  Inertialsensor-Einheit nach Anspruch 2, **dadurch gekennzeichnet, dass** die Inertialsensoren Silizium oder Quarz-Beschleunigungsmesser (QAS) sind.

4.  Inertialsensor-Einheit nach Anspruch 2, **dadurch gekennzeichnet, dass** die Inertialsensoren Silizium- oder Quarz-Drehgeschwindigkeits-Sensoren (QRS) sind.

5.  Inertialsensor-Einheit nach einem der Ansprüche 1 bis 3, **dadurch gekennzeichnet, dass** die Inertialsensoren in einen Schaltungsbaustein integriert sind.

6.  Inertialsensor-Einheit nach einem der Ansprüche 1 bis 3, **dadurch gekennzeichnet, dass**

    -   die miniaturisierten Sensoren (36,40,48) in Gruppen (34,42,46) auf der Oberfläche von Wafern (28,30,32) ausgebildet sind, die auf einem flachen Waferträger (26) sitzen,

    -   die Eingangsachsen (38,44,50) der Sensoren (36,40,48) einer Gruppe (34,42,46) jeweils zueinander parallel verlaufen und

    -   der Waferträger (26) zwischen den Gruppen (34,42,46) abwinkelbar ist.

7.  Inertialsensor-Einheit nach Anspruch 6, **dadurch gekennzeichnet, dass** auf einem ebenen Waferträger (26) von rechteckiger Grundform in Längsrichtung nebeneinander drei Wafer (28,30,32) mit Gruppen (34,42,46) von Sensoren (36,40,48) ausgebildet sind,

    -   die Eingangsachsen (44,50) einer ersten und einer dazu benachbarten zweiten Gruppe (42 bzw. 46) bei ebenem Waferträger (26) zueinander parallel verlaufen,

    -   die Eingangsachsen (38) der dritten Gruppe (34) bei ebenem Waferträger (26) senkrecht zu den Eingangsachsen (44,50) der ersten und der zweiten Gruppe (42,46) verlaufen und

- der Waferträger (26) zwischen den Gruppen (34 42,46) entlang in Querrichtung verlaufender Faltkanten (52,54) um jeweils 90° abwinkelbar ist.

8. Inertialsensor-Einheit nach Anspruch 6 oder 7, **dadurch gekennzeichnet, dass** ein die Signal-Verarbeitungsmittel enthaltendes Mikroelektronik-Modul (70) in dem von dem gefalteten Waferträger (26) umschlossenen Hohlraum angeordnet ist.

9. Inertialsensor-Einheit nach einem der Ansprüche 1 bis 8, **dadurch gekennzeichnet, dass** die Signalverarbeitungsmittel ein erstes neuronales Netz (84) aufweisen, das anhand von wirksamen inertialen Messgrössen und zugeordneten Ausgangs-Meßsignalen trainiert ist.

10. Inertialsensor-Einheit nach Anspruch 9, **dadurch gekennzeichnet, dass**

- die Signalverarbeitungsmittel ein zweites neuronales Netz aufweisen, das auf die Erkennung von Ausfällen von Sensoren trainiert ist und

- das erste neuronale Netz von dem zweiten neuronalen Netz im Sinne einer Rekonfiguration der Sensoren beeinflussbar ist.

11. Inertialsensor-Einheit nach einem der Ansprüche 1 bis 10, **dadurch gekennzeichnet, dass** sie mehrere Sätze von miniaturisierten Sensoren für verschiedene inertiale Messgrössen aufweist.

**Claims**

1. Inertial sensor unit for measuring of an inertial measuring quantity with a plurality of miniaturized inertial sensors (12; 36; 40; 48), which are arranged such that they are exposed to the same inertial measuring quantity and provide signals depending of this measuring quantity with common signal processing means (70), which are connected to the inertial sensors (12; 36; 40; 48) for the generation of an output measuring signal representing the measuring quantity, **characterized in that**

   (a) cach of the inertial sensors (12; 36; 40; 48) comprises a miniturized resonator, wherein the miniaturized resonator is arranged such that its frequency is influenced by the inertial measuring quantity, this resonator frequency serving as a measure for the respective inertial measuring quantity, and

   (b) for the measuring of the inertial measuring quantity over an extended measuring range a plurality of such sensors (12.11...12.N1) formed as miniaturized resonators with different measuring ranges is arranged such that each of these sensors (12.11...12N1) operates in a portion of said extended measuring range.

2. Inertial sensor unit according to claim 1, **characterized in that** the sensors (12; 36; 40; 48) is formed of silicon or quartz inertial sensors.

3. Inertial sensor unit according to claim 2, **characterized in that** the inertial sensors are silicon or quartz acceleration sensors (QAS).

4. Inertial sensor unit according to claim 2, **characterized in that** the inertial sensors are silicon or quartz angular rate sensors (QRS).

5. Inertial sensor unit according to anyone of claims 1 to 3, **characterized in that** the inertial sensors are integrated in an integrated component.

6. Inertial sensor unit according to anyone of claims 1 to 3, **characterized in that**

   - the miniaturized sensors (36, 40, 48) are formed in groups (34, 42, 46) on the surface of wafers (28, 30, 32), which are positioned on a flat wafer carrier,

   - the input axes (38, 44, 50) of the sensors (36, 40, 48) of a group (34, 42, 46) parallely extend to each other and

   - the wafer carrier (26) is foldable between the groups (34, 42, 46).

7. Inertial sensor unit according to claim 6, **characterized in that** three wafers (28, 30, 32) with groups (34, 42, 46) of sensors (36, 40, 48) are longitudinally adjacent to each other formed on one plane wafer carrier (26) with rectangular shape,

   - the input axes (44, 50) of a first and an adjacent second group (42, 46, respectively) parallely extend to each other with a plane wafer carrier (26),

   - the input axis (38) of the third group extends perpendicular to the input axes (44, 50) of the first and the second group (42, 46) with a plane wafer carrier (26) and

   - the wafer carrier (26) is foldable by 90 degrees between the groups (34, 42, 46) along transversally extending folding edges (52,54).

**8.** Inertial sensor unit according to claim 6 or 7, **characterized in that** a mikro elektronic module (70) containing a signal processing means is arranged in the hollow space enclosed by the folded wafer carrier (26).

**9.** Inertial sensor unit according to anyone of claims 1 to 8, **characterized in that** the signal processing means have a first neural network (84), which is trained by effective inertial measuring quantities and the allocated output measuring signals.

**10.** Inertial sensor unit according to claim 9, **characterized in that**

- the signal processing means have a second neural network, which is trained to recognize failures of sensors and

- the first neural network is connected to be influenced by the second neural network in a sense of reconfiguration of the sensors.

**11.** Inertial sensor unit according to anyone of claims 1 to 10, **characterized in that** it contains several sets of miniaturized sensors for different inertial measuring quantities.


**Revendications**

**1.** Unité de capteurs inertiels destinés à mesurer une valeur de grandeur inertielle munie de plusieurs capteurs inertiels miniaturisés (12;36;40;48) qui sont disposés de telle façon que la même grandeur de mesure inertielle est appliquée à tous les capteurs et qu'ils livrent des signaux en fonction de cette grandeur de mesure, munie de moyens de traitement de signaux communs (70) reliés aux capteurs inertiels (12;36;40;48) afin de générer un signal de mesure de sortie représenté par la grandeur de mesure, **caractérisée par le fait que**

(a) chacun des capteurs inertiels (12;36;40;48) comprend un résonateur miniaturisé, le résonateur miniaturisé étant disposé de telle façon que sa fréquence est influencée par la grandeur de mesure inertielle, cette fréquence de résonateur servant de mesure de la grandeur de mesure inertielle respective, et
(b) pour mesurer la grandeur de mesure inertielle sur une gamme de mesure étendue, plusieurs de ces capteurs (12.11...12.N1) développés en résonateurs miniaturisés présentant des gammes de mesure différentes sont disposés de telle façon que chacun de ces capteurs (12.11...12.N1) travaille dans une partie de ladite gamme de mesure étendue.

**2.** Unité de capteurs inertiels selon la revendication 1, **caractérisée par le fait que** les capteurs (12;36; 40;48) sont formés par des capteurs inertiels au quartz ou au silicium.

**3.** Unité de capteurs inertiels selon la revendication 2, **caractérisée par le fait que** les capteurs inertiels sont des accéléromètres au quartz ou au silicium (QAS) .

**4.** Unité de capteurs inertiels selon la revendication 2, **caractérisée par le fait que** les capteurs inertiels sont des capteurs de vitesse de rotation au quartz ou au silicium (QRS).

**5.** Unité de capteurs inertiels selon l'une des revendications 1 à 3, **caractérisée par le fait que** les capteurs inertiels sont intégrés dans un composant de circuit.

**6.** Unité de capteurs inertiels selon l'une des revendications 1 à 3, **caractérisée par le fait que**

- les capteurs miniaturisés (36,40,48) sont développés en groupes (34,42,46) situés à la surface de galettes (28,30,32) reposant sur un support de galettes plat (26),
- les axes d'entrée (38,44,50) des capteurs (36,40,48) d'un groupe (34,42,46) s'étendent à chaque fois parallèlement les uns par rapport aux autres et
- le support de galettes (26) est susceptible d'être plié entre les groupes (34,42,46).

**7.** Unité de capteurs inertiels selon la revendication 6, **caractérisée par le fait que** trois galettes (28,30,32) munies de groupes (34,42,46) de capteurs (36,40,48) sont développées dans le sens longitudinal les unes à côté des autres sur un support de galettes plan (26) ayant une forme de base rectangulaire,

- les axes d'entrée (44,50) d'un premier groupe et d'un second groupe adjacent à celui-ci (42 et 46 respectivement) s'étendent, dans le cas du support de galettes plan (26), parallèlement l'un par rapport à l'autre,
- les axes d'entrée (38) du troisième groupe (34) s'étendant, dans le cas du support de galettes plan (26), perpendiculairement par rapport aux axes d'entrée (44,50) du premier et du deuxième groupe (42,46) et
- le support de galettes (26) est susceptible d'être plié de chaque fois 90° entre les groupes (34,42,46) le long d'arêtes de pliage (52,54) s'étendant dans le sens transversal.

**8.** Unité de capteurs inertiels selon la revendication 6 ou 7, **caractérisée par le fait qu'**un module de microélectronique (70) comprenant les moyens de traitement de signaux est disposé dans l'espace creux entouré par le support de galettes plié (26).

9.  Unité de capteurs inertiels selon l'une des revendications 1 à 8, **caractérisée par le fait que** les moyens de traitement de signaux présentent un réseau neuronal (84) entraîné à l'aide de grandeurs de mesure inertielles actives et de signaux de mesure de sortie associés.

10. Unité de capteurs inertiels selon la revendication 9, **caractérisée par le fait que**

    -   les moyens de traitement de signaux présentent un second réseau neuronal entraîné pour reconnaître les pannes des capteurs et
    -   le premier réseau neuronal est susceptible d'être influencé par le second réseau neuronal en vue d'une reconfiguration des capteurs.

11. Unité de capteurs inertiels selon l'une des revendications 1 à 10, **caractérisée par le fait qu'**elle présente plusieurs jeux de capteurs miniaturisés pour des grandeurs de mesure inertielles différentes.

ANORDNUNG FÜR DIE ANDEREN MESSRICHTUNGEN

12 NM

12 N2

MESSBEREICH „N" 12.N1

12.22

20

18

22

16

12.2M

MESSBEREICH „2"

12.21

12.12

12.1M

10

14

REDUNDANTE SENSOREN

12.11 MESSBEREICH „1"

FIG. 1

Fig. 2

Fig. 3

Fig. 4

Fig. 5

1.Schritt

2.Schritt

X-WAFER 28

Z-WAFER 30

Y-WAFER 32

Fig. 6

Einschub

Abdeckplatte

EP 0 848 231 B1

Fig.7

EP 0 848 231 B1

SIGNALVERARBEITUNG

SENSORELEMENT WAFER

42    46    26    92    122    124    126    134    132    136    148

X-WAFER    Z-WAFER    Y-WAFER

FDIR WAFER (FDIR-NET)

X-FDIR NNET    X-STATUS

Z-FDIR NNET

Y-FDIR NNET

SIGNALWAFER (SIGNAL-NNET)

X-SIGNAL NNE    Z-SIGNAL NNET    Y-SIGNAL NNET

$\omega_x$   $a_x$   $\omega_z$   $a_z$   $\omega_y$   $a_y$

Z-STATUS

Y-STATUS

Fig. 8

EP 0 848 231 B1